Europäisches Patentamt
European Patent Office
Office européen des brevets

(11) Publication number: **0 122 013 B1**

# (12) EUROPEAN PATENT SPECIFICATION

(45) Date of publication of patent specification: **21.12.88**

(51) Int. Cl.⁴: **C 02 F 5/08**, C 23 F 11/00

(21) Application number: **84301450.7**

(22) Date of filing: **05.03.84**

(54) **Polymeric additives for water.**

(30) Priority: **07.03.83 US 472808**
**14.02.84 US 578331**

(43) Date of publication of application:
**17.10.84 Bulletin 84/42**

(45) Publication of the grant of the patent:
**21.12.88 Bulletin 88/51**

(84) Designated Contracting States:
**AT BE CH DE FR GB IT LI LU NL SE**

(56) References cited:
**EP-A-0 062 718**
**FR-A-2 511 668**
**FR-A-2 515 631**
**GB-A-2 054 548**
**US-A-3 578 589**
**US-A-3 879 288**
**US-A-4 048 066**
**US-A-4 166 041**
**US-A-4 176 059**

(73) Proprietor: **CALGON CORPORATION**
**Route 60-Campbell's Run Road**
**Robinson Township Pennsylvania 15205 (US)**

(72) Inventor: **Persinski, Leonard J.**
**340 Orchard Spring Road**
**Pittsburgh Pennsylvania 15226 (US)**
Inventor: **Walker, Jerry L.**
**210 Norman Drive**
**Coraopolis Pennsylvania 15108 (US)**
Inventor: **Boffardi, Bennett P.**
**5723 Glen Hill Drive**
**Bethel Park Pennsylvania 15102 (US)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 122 013 B1

**Description**

This invention relates to polymeric additives for water.

Most industrial waters contain alkaline-earth metal cations, such as those of calcium, barium and magnesium, and several anions such as bicarbonate, carbonate, sulphate, oxalate, phosphate, silicate and fluoride. When combinations of these anions and cations are present in concentrations that exceed the solubility of their reaction products, precipitates form until these concentrations are no longer exceeded. For example, when the concentrations of calcium ion and carbonate ion exceed the solubility of calcium carbonate, a solid phase of calcium carbonate will form.

Such concentrations are exceeded for various reasons, such as partial evaporation of the aqueous phase, changes in pH, pressure and/or temperature, and the introduction of additional ions that form insoluble compounds which the ions already present in the solution.

As these reaction products are precipitated on the surfaces of the water-carrying system, they form scale or deposits, accumulation of which prevents effective heat transfer, interferes with fluid flow, facilitates corrosive processes, and harbours bacteria. Scale is an expensive problem in many industrial water systems and causes delays and shutdowns for cleaning and removal.

Scale-forming compounds can be prevented from precipitating by inactivating their cations with chelating or sequestering agents, so that the solubility of their reaction products is not exceeded. Generally, this requires as much chelating or sequestering agent as cation, since chelation is a stoichiometric reaction, and these amounts are not always desirable or economical.

Almost fifty years ago, it was discovered that certain inorganic polyphosphates would prevent such precipitation when added in amounts far less than the concentrations needed for sequestering or chelating. By "polyphosphates" is meant phosphates having a molar ratio of metal oxide to $P_2O_5$ in the range 1:1 to 2:1.

When a precipitation inhibitor is present in a potentially scale-forming system at a markedly lower concentration than that required for sequesering (stoichiometric) the scale-forming cation, it is said to be present in "threshold" amounts. See for example, Hatch and Rice, "Industrial Engineering Chemistry", Vol. 31, pages 51 to 53 (Jan. 1939); Reitemeier and Buehrer, "Journal of Physical Chemistry", Vol. 44, No. 5, pages 535 to 536 (May 1940); and U.S. Patent Specifications US—A—2,358,222 and US—A—2,539,305.

Generally, sequestering takes place when the weight of the threshold active compound is greater than that of the scale-forming cation components. Threshold inhibition generally takes place at a weight ratio of threshold active compound to scale-forming cation components of less than 0.5:1.0.

Certain water-soluble polymers, including groups derived from acrylamide and acrylic acid have been used to condition water-containing scale-forming compounds, for example, see U.S. Patent Specifications US—A—2,783,200; 3,514,476; 2,980,610; 3,285,886; 3,463,730 and 3,518,204.

U.S. Patent Specification US—A—3,928,196 discloses the use of a copolymer of 2-acrylamido-2-methylpropylsulphonic acid and acrylic acid in inhibiting scale.

U.S. Patent Specification US—A—3,879,288 discloses the use of a polymer of fumaric and allylsulphonic acids in conjunction with zinc sulphate as a scale and corrosion inhibitor in a water supply.

French Patent Specification FR—A—2,511,688 discloses compositions containing certain aminocarboxylate chelating agents together with a polymer of methacrylic and 2-acrylamido-2-methylpropanesulphonic acids and their use in preventing scale formation in aqueous systems.

U.S. Patent Specification US—A—3,578,589 discloses mixtures of non-ionic surface active agents and (meth)acrylic acid polymers of molecular weight 400 to 95,000 and their use as scale preventors (see Claim 1). Among the surface active agents is nonylphenoxypolyethylene-oxyethanol. There is however no suggestion that the (meth)acrylic acid polymer should be a copolymer containing a sulphonic acid group.

U.S. Patent Specification US—A—4,176,059 describes a scale preventor comprising soluble molybdate ion, a surfactant, and possibly a polyacrylate.

The present invention is based on the discovery that an admixture of a water-soluble polymer comprising a carboxylic acid and a sulphonic acid, or their salts, including the copolymer of U.S. Patent US—A—3,928,196, in combination with a water-soluble polycarboxylate, an ethylene oxide derivative, a metal salt and/or a sulphonate, has a greater effect than would be expected from the sum of their separate effects, i.e. is synergistic.

Our copending application number 86110150.9 (EP—A—0 210 590), which is divided out of the present application claims a method of inhibiting the formation of insoluble alluvial, metal oxide and metal hydroxide deposits in an aqueous system that is a cooling system, a reverse osmosis system, a desalination plant or a gas scrubber, comprising adding to the water in the system at least 0.1 mg/l of a water-soluble polymer comprising an unsaturated carboxylic acid and an unsaturated sulphonic acid, or their salts, the weight ratio of carboxylic to sulphonic acid being in the range 1:20 to 20:1, and at least one phosphonate.

The present invention provides an admixture comprising:

(a) a water-soluble polymer having a weight-average molecular weight of less than 25,000, as determined by low-angle-laser light scattering, and that comprises (i) acrylic acid and/or methacrylic acid; and (ii) 2-acrylamido-2-methylpropyl sulphonic acid and/or 2-methacrylamido-2-methylpropyl sulphonic acid; where the weight ratio of (i):(ii) is in the range from 1:20 to 20:1; and

(b) at least one water-soluble compound that is an alkylphenoxy poly(ethyleneoxy) ethanol, a propylene-terminated ethylene oxide adduct, a polymer of maleic acid or anhydride, a polyacrylic acid, a phosphino carboxylic acid, a copolymer of acrylamide and a acrylate, a copolymer of acrylic acid and 2-hydroxypropyl acrylate, a copolymer of maleic acid or anhydride and a sulphonated styrene, a sulphonated polystyrene, a zinc salt or a molybdate salt; in which the weight ratio of (a):(b) is in the range 1:50 to 50:1.

Also in accordance with the present invention, a method of inhibiting the corrosion of metal in an aqueous system that is a cooling system, a reverse osmosis system, a desalination plant or a gas scrubber comprises adding to the system at least 0.1 mg/l of such an admixture.

Also in accordance with the invention, a method of inhibiting the precipitation of scale-forming salts in an aqueous system that is a cooling system, a reverse osmosis system, a desalination plant or a gas scrubber comprises adding to the system at least 0.1 mg/l of such an admixture.

The phrase "inhibiting the precipitation" includes threshold inhibition, dispersion, solubilization, and particle size reduction.

The phrase "scale-forming salts" includes any of the scale-forming salts, including, but not limited to, calcium carbonate, calcium sulphate, calcium phosphate, calcium phosphonate (including calcium hydroxyethylidene diphosphonic acid), calcium oxalate, calcium fluoride, barium sulphate and magnesium salts.

Polymer (a) may be prepared from more than two monomers. Monomers other than carboxylic and sulphonic acids or their salts may be present in the polymer. Mixtures of the polymers may be used.

The weight ratio of carboxylic (acrylic and/or methacrylic) acid to sulphonic acid is 1:20 to 20:1, preferably 1:10 to 10:1, and particularly 4:1 to 1:4.

Zinnc chromate is especially effective as component (b) in inhibiting corrosion. The polymer stabilizes the zinc ion and prevents its precipitation at high pH.

The weight ratio of component (a) to component (b) is preferably 1:50 to 50:1, particularly 1:10 to 10:1.

It is preferred that component (a) be a copolymer.

The carboxylic acid/sulphonic acid polymer has been found, in addition, to enhance the effectiveness of the water-soluble metal salts and sulphonated polymers.

Calcium phosphate scale is a particular problem at a pH of 7 to 9. The admixtures of the present invention were unexpectedly found to be effective at a pH 7 to 9 and at temperatures ranging from 0 to 80°C. The admixtures of the invention are, of course, effective over a broad pH range (e.g. less than 7 and to some extent, greater than 9).

The admixture is preferably used at a dosage of 1 to 100 mg/l in inhibiting scale and corrosion, particularly 1 to 15 mg/l.

The weight-average molecular weight of component (a) is preferably less than 15,000, particularly less than 10,000, as determined by low-angle laser light scattering.

The admixtures of the invention were found to be synergistic in that the admixture inhibited scale and corrosion to a greater extent than expected from the behaviour of the separate ingredients. The admixtures are not necessarily synergistic in respect of all scale-forming materials and corrodable metals, but, as will appear from the data given, each of those tested is synergistic in respect of at least one of the aspects tested.

The following abbreviations and product names are used in the Examples and are defined as indicated:

AA/AMPS=copolymer of acrylic acid and 2-acrylamido-2-methylpropyl sulphonic acid having a weight average molecular weight of about 8200, as determined by low angle laser light scattering.

CL361S=an aqueous solution of alkyl phenoxy poly(ethyleneoxy) ethanols and propylene oxide terminated ethylene oxide adduct, available from Calgon Corporation.

PMA=polymaleic acid, MWT=1300, as determined by light scattering, 70 percent active.

Natrol 42=a solution of a 60/40 copolymer of acrylic acid and 2-hydroxypropyl acrylate, manufactured by National Starch Corporation.

Beclene 500=phosphinocarboxylic acid, manufactured by Ciba Geigy.

Versa TL-3=copolymer of maleic anhydride and sulphonated styrene, manufactured by National Starch Corporation.

Versa TL-70=sulphonated polystyrene, manufactured by National Starch Corporation.

PAA=polyacrylic acid, MWT 4700, as determined by light scattering.

$Zn^{++}$=zinc ion added as zinc dissolved in hydrochloric acid. The concentration reported is solely zinc ion.

P-35=copolymer of 40 percent acrylamide and 60 percent acrylate MWT 7500, manufactured by American Cyanamid.

$MoO_4^{-2}$=molybdate ion added as sodium molybdate. The concentration reported is solely molybdate ion.

Examples 1A to 8A, 1B to 9B and 1C to 14C

Synergism between copolymer of carboxylic acids and sulphonic acids and other building blocks were screened for threshold inhibition of calcium carbonate, calcium sulphate and calcium phosphate. Stagnant

flask tests were used with solutions stored for 24 hours at constant temperature. The standard test conditions used were as follows:

| | Calcium carbonate | Calcium sulphate | Calcium phosphate |
|---|---|---|---|
| Calcium, mg/l | 200 | 2000 | 200 |
| Bicarbonate, mg/l | 600 | — | — |
| Sulphate, mg/l | — | 4800 | — |
| Phosphate, mg/l | — | — | 4 |
| pH | 8.0—8.2 | 7.0 | 8.5 |
| Temperature, °C | 65 | 65 | 60 |

Four flasks were used for each test; one for a control (no inhibitor), one with the copolymer alone, one with the other inhibitor alone, and the last with both inhibitors. For all inhibitors, a level of inhibitor was picked that by itself would give 0 to 50 percent inhibition as determined by the following equation:

$$\text{Percent inhibition} = \frac{S_T - S_c}{S_I - S_c} \times 100 \text{ where:}$$

$S_I$=level of test species initially;
$S_c$=level of test species at end of control test; and
$S_T$=level of test species at end of inhibitor test.

Calcium was used as the test species in the calcium carbonate and calcium sulphate tests, and phosphate was the test species in the calcium phosphate test. Synergism was determined by comparing the percent inhibition obtained using both inhibitors, each at the same level as used alone, with the sum of the inhibition obtained using the inhibitors alone. The results are summarized in Tables A, B and C.

In each of the Tables, the Example number corresponds to a particular combination of inhibitors, although the concentration varies from Table to Table.

Examples 2D to 16D

The synergistic effects of the AA/AMPS copolymer and other building blocks for corrosion inhibition were determined in eight-litre test cells using synthetic four-cycle Pittsburgh water at pH 7.5. The tests were run for 7 days at a constant temperature of 50°C. Two steel test coupons (1 inch×2 inches, (25.4×50.8 mm) were suspended on glass rods in each test cell. The test solution was constantly agitated by a submersible pump and air was constantly bubbled through the solution to keep it saturated.

The various test solutions were treated with the AA/AMPS copolymer and the other building blocks, alone or with a combination of the copolymer and another building blocks. Synergism was determined by comparing the corrosion rates obtained on the test coupons from the cells containing the individual inhibitors with those from the cell containing the combination of inhibitors. The results are summarized in Table D.

TABLE A
$CaCO_3$ inhibition
200 mg/l $Ca^{++}$, 600 mg/l $HCO_3^-$, pH 8.0—8.2, 65°C, 24 hours

| Example | Component A | Concentration (mg/l active) | Percent inhibition | Component B | Concentration (mg/l active) | Percent inhibition | Percent expected A+B | Percent actual A+B | Actual-expected (percent) |
|---|---|---|---|---|---|---|---|---|---|
| 1A | 60/40 AA/AMPS | 0.5 | 34 | CL-361S | 10.0 | 0 | 34 | 46 | +12 |
| 2A | 60/40 AA/AMPS | 0.5 | 34 | PMA | 0.1 | 12 | 46 | 52 | + 6 |
| 3A | 60/40 AA/AMPS | 0.5 | 34 | Natrol 42 | 0.5 | 34 | 68 | 66 | − 2 |
| 4A | 60/40 AA/AMPS | 0.5 | 34 | Belclene 500 | 0.25 | 39 | 73 | 68 | − 5 |
| 5A | 60/40 AA/AMPS | 0.5 | 34 | Versa TL-70 | 5.0 | 16 | 50 | 42 | − 8 |
| 6A | 60/40 AA/AMPS | 0.5 | 34 | PAA | 0.5 | 52 | 82 | 65 | −17 |
| 7A | 60/40 AA/AMPS | 0.5 | 34 | Versa TL-3 | 10.0 | 37 | 71 | 50 | −21 |
| 8A | 60/40 AA/AMPS | 0.5 | 34 | P-35 | 1.0 | 68 | 102 | 69 | −33 |

TABLE B

$CaSO_4$ Inhibition

2000 mg/l $Ca^{++}$, 4800 mgl $SO_4^{-2}$, pH 7.0, 65°C, 24 hours

| Example | Component A | Concentration (mg/l active) | Percent Inhibition[a] | Component B | Concentration (mg/l active | Percent inhibition | Percent expected A+B | Percent actual A+B | Actual-expected (percent) |
|---|---|---|---|---|---|---|---|---|---|
| 1B | 60/40 AA/AMPS | 1.0 | 16.7 | CL-361S | 1.0 | 3.5 | 20.2 | 19.3 | − 0.9 |
| 2B | 60/40 AA/AMPS | 1.0 | 16.7 | PMA | 1.0 | 47.4 | 64.1 | 85.1 | +21.0 |
| 3B | 60/40 AA/AMPS | 1.0 | 16.7 | Natrol 42 | 0.5 | 8.8 | 25.5 | 28.9 | + 3.4 |
| 4B | 60/40 AA/AMPS | 1.0 | 16.7 | Belclene 500 | 1.0 | 8.8 | 25.5 | 38.6 | +13.1 |
| 5B | 60/40 AA/AMPS | 1.0 | 16.7 | Versa TL-70 | 1.0 | 7.0 | 23.7 | 21.1 | − 2.6 |
| 6B | 60/40 AA/AMPS | 1.0 | 16.7 | PAA | 0.5 | 10.5 | 27.2 | 36.0 | + 8.8 |
| 7B | 60/40 AA/AMPS | 1.0 | 16.7 | Versa TL-3 | 1.0 | 5.3 | 22.0 | 19.3 | − 2.7 |
| 8B | 60/40 AA/AMPS | 1.0 | 11.0 | P-35 | 2.0 | 16.0 | 27.0 | 31.0 | + 4.0 |
| 9B | 20/80 AA/AMPS | 1.5 | 7.0 | PMA | 1.0 | 18.0 | 25.0 | 27.0 | + 2.0 |

[a] Since the $CaSO_4$ inhibition curve is very steep, experimental variance is quite large.

TABLE C
$Ca/PO_4$ Inhibition
200 mg/l $Ca^{++}$, 4 mg/l $PO_4^{-3}$, pH 8.5, 60°C, 24 hours

| Example | Component A | Concentration (mg/l active) | Percent inhibition[a] | Component B | Concentration (mg/1 active) | Percent inhibition | Percent expected A+B | Percent actual A+B | Actual-expected (percent) |
|---|---|---|---|---|---|---|---|---|---|
| 1C | 60/40 AA/AMPS | 1.5 | 26 | CL-361S | 10.0 | 5 | 31 | 22 | − 9 |
| 2C | 60/40 AA/AMPS | 1.5 | 23 | PMA | 1.5 | 30 | 53 | 75 | +22 |
| 3C | 60/40 AA/AMPS | 1.5 | 23 | Natrol 42 | 3.0 | 54 | 77 | 95 | +18 |
| 4C | 60/40 AA/AMPS | 1.5 | 23 | Belclene 500 | 5.0 | 44 | 67 | 76 | + 9 |
| 5C | 60/40 AA/AMPS | 1.5 | 20 | Versa TL-70 | 10.0 | 36 | 56 | 100 | +44 |
| 6C | 60/40 AA/AMPS | 1.5 | 23 | PAA | 1.5 | 30 | 53 | 95 | +42 |
| 7C | 60/40 AA/AMPS | 1.5 | 20 | Versa TL-3 | 4.0 | 20 | 40 | 97 | +57 |
| 8C | 60/40 AA/AMPS | 1.5 | 16 | P-35 | 5.0 | 31 | 47 | 81 | +34 |
| 11C | 80/20 AA/AMPS | 1.5 | 6 | PAA | 1.5 | 13 | 19 | 45 | +26 |
| 12C | 80/20 AA/AMPS | 1.5 | 6 | Versa TL-3 | 4.0 | 57 | 63 | 86 | +23 |
| 13C | 20/80 AA/AMPS | 1.5 | 18 | Versa TL-3 | 4.0 | 57 | 75 | 77 | + 2 |
| 14C | 20/80 AA/AMPS | 1.5 | 18 | PAA | 1.5 | 13 | 31 | 31 | 0 |

[a] The AA/AMPS $CaPO_4$ inhibition was tested each time a comparison test was conducted. The testing was conducted over a several-week period. Since the $CaPO_4$ inhibition curve is very steep, experimental variance is quite large.

TABLE D
Steel corrosion inhibition
4 Cycle Pittsburgh water, 50°C, pH 7.5, 7 days

| Example | Component A | Concentration (mg/l active) | Corrosion rate mpy | Component B | Concentration (mg/l active) | Corrosion rate mpy | Corrosion rate (mpy) 50 mg/l A+ 50 mg/l B | Synergism |
|---|---|---|---|---|---|---|---|---|
| Control | Blank | | | Blank | | | 74.0 | |
| 2D | 60/40 AA/AMPS | 100 | 8.7 | PMA | 100 | 28.9 | 27.2 | |
| 3D | 60/40 AA/AMPS | 100 | 8.7 | Natrol 42 | 100 | 8.0 | 15.4 | |
| 6D | 60/40 AA/AMPS | 100 | 8.7 | PAA | 100 | 10.1 | 7.1 | X |
| 15D1 | 60/40 AA/AMPS | 20 | 49.0 | $Zn^{++}$ | 10 | 23.9 | A+B<br>31.5 | |
| 15 D2 | 60/40 AA/AMPS | 75 | 20.1 | $Zn^{++}$ | 10 | 23.9 | 12.9 | X |
| 16 D | 60/40 AA/AMPS | 75 | 20.1 | $MoO_4^{-2}$ | 25 | 62.4 | 8.4 | X |

The following Table indicates in respect of which aspect the combination of each of the above Examples demonstrates synergism.

| Example | $CaCO_3$ | $CaSO_4$ | $Ca/PO_4$ | Corrosion |
|---|---|---|---|---|
| 1 | X | | | |
| 2 | X | X | X | |
| 3 | | X | X | |
| 4 | | X | X | |
| 5 | | | X | |
| 6 | | X | X | X |
| 7 | | | X | |
| 8 | | X | X | |
| 9 | | X | | |
| 11 | | | X | |
| 12 | | | X | |
| 13 | | | X | |
| 14 | | | X | |
| 15 | | | | X |
| 16 | | | | X |

Example E

40 g of zinc ion was added to 8 litres of Pittsburgh tap water that had been concentrated 4 times. Ten experiments were run, five without additive and five with 20 mg/l of 60/40 AA/AMPS. The temperature of the test solutions was maintained at 50°C. The pHs of the five solutions without additive were 7.0, 7.5, 8.0, 8.5 and 9.0, respectively. The pHs of the five additive-containing solutions were likewise 7.0, 7.5, 8.0, 8.5 and 9.0, respectively. Samples were taken after one and three days from each of the solutions. The samples were filtered and the zinc ion concentration determined by atomic adsorption spectrometry. The results are summarized in Table E.

Both solutions at pH 9 contained 0.25 mg/l AMP to prevent any $CaCO_3$ precipitation and interference at the high pH with the zinc data.

TABLE E

Initial zinc concentration 5 mg/l in 4 cycle Pittsburgh water[1]; 50°C

| | Zinc concentration (mg/l) without additive | | Zinc concentration (mg/l) with 10 mg/l 60/40 AA/AMPS copolymer | |
|---|---|---|---|---|
| pH | Day 1 | Day 3 | Day 1 | Day 3 |
| 7.0 | 4.1 | 4.5 | 4.5 | 4.8 |
| 7.5 | 3.8 | 4.4 | 4.8 | 5.4[2] |
| 8.0 | 0.90 | 0.65 | 4.6 | 4.7 |
| 8.5 | 0.30 | 0.25 | 4.5 | 4.9 |
| 9.0 | 0.25 | 0.30 | 4.6 | 4.6 |

[1] 88 mg/l $Ca^{++}$, 24 mg/l $Mg^{++}$, 328 mg/l $SO_4^=$, 70 mg/l $Cl^-$, 40 mg/l $HCO_3^-$.

[2] Values slightly elevated above 5 mg/l due to a concentrating effect due to solution evaporation.

**Claims**

1. An admixture comprising

(a) a water-soluble polymer having a weight-average molecular weight of less than 25,000, as determined by low-angle-laser light scattering, and that comprises (i) acrylic acid and/or methacrylic acid; and (ii) 2-acrylamido-2-methylpropyl sulphonic acid and/or 2-methacrylamido-2-methylpropyl sulphonic acid; where the weight ratio of (i):(ii) is in the range from 1:20 to 20:1; and

(b) at least one water-soluble compound that is an alkylphenoxy poly(ethyleneoxy) ethanol, a propylene-terminated ethylene oxide adduct, a polymer of maleic acid or anhydride, a polyacrylic acid, a phosphino carboxylic acid, a copolymer of acrylamide and an acrylate, a copolymer of acrylic acid and 2-hydroxypropyl acrylate, a copolymer of maleic acid or anhydride and a sulphonated styrene, a sulphonated polystyrene, a zinc salt or a molybdate salt; in which the weight ratio of (a):(b) is in the range 1:50 to 50:1.

2. An admixture as claimed in Claim 1, in which the weight ratio of (i):(ii) lies in the range 1:4 to 4:1.

3. A method of inhibiting the precipitation (including threshold inhibition, dispersion, solubilization, and particle size reduction) of scale-forming salts in an aqueous system that is a cooling system, a reverse osmosis system, a desalination plant or a gas scrubber, comprising adding to the system at least 0.1 mg/l of an admixture as claimed in Claim 1 or 2, in which ingredient (b) is other than a zinc or molybdate salt.

4. A method of inhibiting the corrosion of the metal in an aqueous system that is a cooling system, a reverse osmosis system, a desalination plant or a gas scrubber, comprising adding to the system at least 0.1 mg/l of an admixture as claimed in Claim 1 or 2, in which ingredient (b) is a zinc or molybdate salt.

**Patentansprüche**

1. Ein Gemisch, enthaltend

(a) ein wasserlösliches Polymer mit einem mittleren Molekulargewicht von weniger als 25.000, bestimmt durch Engwinkel-Laserlichtstreuung, und welches enthält (i) Acrylsäure und/oder Methacrylsäure; und (ii) 2 - Acrylamido - 2 - methylpropylsulfonsäure und/oder 2 - Methylacrylamido - 2 - methylpropylsulfonsäre; wobei das Gewichtsverhältnis von (i):(ii) im Bereich von 1:20 bis 20:1 liegt; und

(b) wenigstens eine wasserlösliche Verbindung, die ein Alkylphenoxypoly(ethylenoxy)ethanol, ein Ethylenoxidaddukt mit endständigem Propylen, ein Polymer von Maleinsäure oder Maleinsäureanhydrid, eine Polyacrylsäure, eine Phosphinocarbonsäure, ein Copolymer aus Acrylamid und einem Acrylat, ein Copolymer aus Acrylsäure und 2 - Hydroxypropylacrylat, ein Copolymer aus Maleinsäure oder Maleinsäureanhydrid und einem sulfonierten Styrol, ein sulfoniertes Polystyrol, ein Zinksalz oder ein Molybdatsalz ist; wobei das Gewichtsverhältnis von (a):(b) im Bereich von 1:50 bis 50:1 liegt.

2. Eine Mischung wie in Anspruch 1 beansprucht, in welcher das Gewichtsverhältnis von (i):(ii) im Bereich von 1:4 bis 4:1 liegt.

3. Ein Verfahren zur Hemmung der Fällung (darunter Schwellenhemmung, Dispersion, Solubilisierung und Teilchengrößenverringerung) von Kesselstein-bildenden Salzen in einem wässerigen System, welches ein Kühlsystem, ein Umkehrosmosesystem, eine Entsalzungsanlage oder ein Gaswäscher ist, umfassend das Zusetzen von wenigstens 0,1 mg/l einer Mischung, wie sie in Anspruch 1 oder 2 beansprucht ist, in welcher der Bestandteil (b) von einem Zink- oder Molybdatsalz verschieden ist, zu dem System.

4. Ein Verfahren zur Hemmung der Metallkorrosion in einem wässerigen System, das ein Kühlsystem, ein Umkehrosmosesystem, eine Entsalzungsanlage oder ein Gaswäscher ist, umfassend das Zugeben von wenigstens 0,1 mg/l einer Mischung, wie in Anspruch 1 oder 2 beansprucht, in welcher der Bestandteil (b) ein Zink- oder Molybdatsalz ist, zu dem System.

**Revendications**

1. Mélange comprenant:

(a) un polymère hydrosoluble ayant une masse moléculaire moyenne en poids inférieure à 25.000, qu'on détermine par diffusion de lumière avec laser à petit angle et qui comprend (i) un acide acrylique et/ou un acide méthacrylique; et (ii) l'acide 2 - acrylamido - 2 - méthylpropyl - sulfonique et/ou l'acide 2 - méthacrylamido - 2 - méthylpropyl - sulfonique; le rapport pondéral de (i):(ii) étant dans l'intervalle de 1:20 à 20:1; et

(b) au moins un composé hydrosoluble qui est un alkylphénoxy - poly(éthylèneoxy)éthanol, un produit d'addition d'oxyde d'éthylène à terminaison propylène, un polymère d'acide maléique ou de son anhydride, un acide polyacrylique, un acide phosphinocarboxylique, un copolymère d'un acrylamide et d'un acrylate, un copolymère d'acide acrylique et d'acrylate de 2-hydroxypropyle, un copolymère d'acide ou d'anhydride maléique et d'un styrène sulfoné, un polystyrène sulfoné, un sel de zinc d'un molybdate, le rapport pondéral de (a):(b) étant compris entre 1:50 et 50:1.

2. Mélange selon la revendication 1, dans lequel le rapport pondéral de (i) à (ii) est compris entre 1:4 et 4:1.

3. Procédé pour inhiber la précipitation (notamment l'inhibition de seuil, la dispersion, la solubilisation

et la réduction de la grosseur des particules), des sels formant du tartre dans un système aqueux qui est un système de refroidissement, un système d'osmose inverse, un atelier de dessalement ou un épurateur de gaz, qui consiste à ajouter au système au moins 0,1 mg/l d'un mélange selon la revendication 1 ou 2 dans lequel l'ingrédient (b) est autres qu'un sel de zinc ou un molybdate.

4. Procédé pour inhiber la corrosion d'un métal dans un système aqueux qui est un système de refroidissement, un système d'osmose inverse, un atelier de dessalement ou un éparateur de gaz, qui consiste à ajouter au système au moins 0,1 mg/l d'un mélange selon la revendication 1 ou 2 dans lequel l'ingrédient (b) est un sel de zinc ou un molybdate.